(19) Europäisches Patentamt
European Patent Office
Office européen des brevets

(11) Veröffentlichungsnummer: **0 051 308**
**B1**

# (12) EUROPÄISCHE PATENTSCHRIFT

(45) Veröffentlichungstag der Patentschrift: **02.10.85**

(51) Int. Cl.⁴: **G 11 B 5/09**, G 06 F 3/06, G 11 B 20/10

(21) Anmeldenummer: **81109417.6**

(22) Anmeldetag: **30.10.81**

(54) **Verfahren und Schaltungsanordnung zur Formatierung einer Magnetspeicherplatte.**

(30) Priorität: **03.11.80 US 203191**

(43) Veröffentlichungstag der Anmeldung:
**12.05.82 Patentblatt 82/19**

(45) Bekanntmachung des Hinweises auf die Patenterteilung:
**02.10.85 Patentblatt 85/40**

(84) Benannte Vertragsstaaten:
**AT CH DE FR GB IT LI**

(56) Entgegenhaltungen:
**CH - A - 402 067**
**FR - A - 2 445 550**
**US - A - 3 956 736**

**Proceedings of the IEEE, Band 64, Nr. 6, Juni 1976, NEW YORK (US), BASS: "A peripheral-oriented micro-computer system", Seiten 860-872**
**Computer Design, Band 17, Nr. 6, Juni 1978, CONCORD, MASS. (US), WORDEN: "Design considerations for dual-density diskette controllers", Seiten 103-110**

(73) Patentinhaber: **Nixdorf Computer Aktiengesellschaft, Fürstenallee 7, D-4790 Paderborn (DE)**

(72) Erfinder: **Ranalli, Charles, 5 Williams Circle, Burlington, Mass. 01803 (US)**

(74) Vertreter: **Patentanwälte Schaumburg & Thoenes, Mauerkircherstrasse 31 Postfach 86 07 48, D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung betrifft ein Verfahren nach dem Oberbegriff des Patentanspruchs 1 sowie eine Schaltungsanordnung zur Durchführung des Verfahrens nach dem Oberbegriff des Patentanspruchs 5.

Magnetspeicherplatten werden in datenverarbeitenden Anlagen zunehmend als Speichermedien verwendet. Viele Magnetspeicherplatten haben die Form dünner, flexibler Scheiben, die in der Industrie auch als »Floppy-Disk« oder »Diskette« bezeichnet werden. Die Disketten haben eine magnetisierbare Oberfläche, auf die digitale Informationszeichen geschrieben und nachfolgend in der datenverarbeitenden Anlage ausgewertet werden können.

Die Diskette ist in viele in radialer Richtung gegeneinander versetzte Spuren unterteilt, die weiter in Sektoren unterteilt sind. Bei den sogenannten Hardsektor-Disketten ist der Anfang eines jeden Sektors durch eines von mehreren Indexlöchern markiert, die am Innenumfang der Speicherfläche mit Abstand zueinander angeordnet sind. Die gebräuchlichen Softsektor-Disketten haben jedoch nur ein Indexloch. Bei einer Softsektor-Diskette müssen die unterschiedlichen Sektoren vor dem Gebrauch mit bestimmten Indentifikationsinformationen versehen werden. Dieser Prozeß wird auch als Formatierung bezeichnet, und die Identifikationsinformation für die Sektoren ist als Kopfzeichen bekannt. Der Raum auf der Diskettenspur, der auf jedes Kopfzeichen folgt, ist für Datenzeichen reserviert, deren Adresse durch das Kopfzeichen definiert wird, d. h. durch Spur- und Sektornummer. Das Verhältnis der Anzahl von Bytes der Datenzeichen zu den Kopfzeichen ist extrem groß und übersteigt oft 20 : 1. Um den richtigen Abstand der Informationen längs der Spuren der Diskette zu erzielen, müssen zunächst Blindzeichen während der Formatierung in dafür vorgesehene Speicherbereiche auf die Diskette geschrieben werden. Die Blindzeichen werden später durch gültige Datenzeichen ersetzt, wenn die Diskette formatiert wurde.

Bei einem bisher allgemein verwendeten Formatierungsverfahren werden alle Kopfzeichen und Datenzeichen als kontinuierlicher Signalstrom in einem Speicher mit wahlfreiem Zugriff (RAM) gespeichert. Unter der Steuerung einer Zentraleinheit wird jedes Informationsbyte sukzessiv aus diesem Speicher gelesen und auf die Diskette geschrieben. Dieses Verfahren hat einige Nachteile. Zunächst muß ein relativ großer Speicher vorgesehen sein, um alle für den Formatierungsvorgang erforderlichen Daten zu speichern. Ferner verursacht das wiederholte Auslesen und Schreiben eines jeden Bytes eine unerwünschte Belastung der Zentraleinheit. Da der Steuermodul für die Diskette allgemein nur ein Teil einer Datenverarbeitungsanlage ist, begrenzt der übermäßig große Zeitbedarf während des Formatierungsvorgangs die Möglichkeit, daß die Zentraleinheit weitere Aufgaben sumultan durchführen kann.

Ein Verfahren eingangs genannter Art ist aus der GB-A-2 045 479 bekannt. Bei diesem Verfahren werden Formatierungsanweisungen von einer Zentraleinheit in eine Registergruppe und einen Zähler geladen und dann miteinander verknüpft, um Speicher anzusteuern, die die zu schreibenden Informationen enthalten. Dabei gibt der Inhalt des Zählers eine Position an, bei der ein jeweiliges Informationsbyte auf die Magnetspeicherplatte zu schreiben ist. Der numerische Wert, der die Anzahl der zu schreibenden Informationsbytes angibt, muß in einem weiteren Speicher bereitgehalten werden. Somit benötigt dieses bekannte Verfahren drei verschiedene Speicheranordnungen und einen Zähler zum Zählen der einzelnen Schreibvorgänge. Besonders umständlich ist die Adressenvorgabe für die Registergruppe durch die Zentraleinheit.

Es ist Aufgabe der Erfindung, zur Vermeidung solcher Probleme ein Verfahren zur Formatierung sowie eine Schaltungsanordnung zu seiner Durchführung anzugeben, wodurch einerseits der bisher erforderliche hohe Aufwand des Speichers mit wahlfreiem Zugriff überflüssig wird, andererseits die Belastung der Datenverarbeitungsanlage verringert wird, damit neben der Formatierung noch weitere Aufgaben der Zentraleinheit durchgeführt werden können.

Diese Aufgabe wird durch das Verfahren nach dem Patentanspruch 1 und durch die Schaltungsanordnung nach dem Patentanspruch 5 gelöst. Vorteilhafte Weiterbildungen dieses Verfahrens sowie der Schaltungsanordnung zu dessen Durchführung sind Gegenstand der Unteransprüche.

Die Erfindung sieht bei der Formatierung einer Magnetspeicherplatte eine Speicherung digitaler Informationszeichen in komprimierter Form vor. Jedes einzelne Informationsbyte enthält einen numerischen Wert, der angibt, wie oft dieses Byte auf die Magnetspeicherplatte geschrieben werden soll. Hierzu ist ein Steuerzähler vorgesehen, der den numerischen Wert enthält. Eine Steuerschaltung bewirkt das Schreiben der Informationszeichen auf die Magnetspeicherplatte in einer solchen Anzahl, wie sie durch den numerischen Wert bestimmt wird.

Vorzugsweise werden die Informationsbytes und die numerischen Werte in dem Speicher mit wahlfreiem Zugriff zueinander benachbart gespeichert. In einen Adreßzähler wird die Adresse eines Speicherplatzes des genannten Speichers eingegeben. Der Inhalt des Adreßzählers wird ausgewertet um zu bestimmen, ob es sich um eine gerade oder ungerade Zahl handelt. In den Steuerzähler wird der numerische Wert eingegeben, wenn der Inhalt des Adreßzählers von der einen Art ist, und dann wird der Inhalt des Adreßzählers geändert. Wenn der Inhalt des Adreßzählers von der anderen Art ist, so wird die Information auf die Magnetspeicherplatte geschrieben, und dann wird der Inhalt des Steuerzählers geändert. Der Adreßzähler bleibt in seinem Zustand bis der Steuerzähler einen vorbestimmten Zählerstand erreicht. Entsprechend wird ein und dasselbe Informationsbyte wiederholt auf die Magnetspeicherplatte so oft geschrieben, wie es der Inhalt des Steuerzählers angibt, in den zuvor der numerische Wert eingegeben wurde, die diesem bestimmten Informationsbyte zugeordnet ist.

Ein Ausführungsbeispiel der Erfindung wird im folgenden anhand der Figuren beschrieben. Es zeigt

Fig. 1 eine Draufsicht auf eine Magnetspeicherplatte,

Fig. 2 eine schematische Blockdarstellung einer Einrichtung zur Durchführung des erfindungsgemäßen Verfahrens, und

Fig. 3 ein Flußdiagramm des erfindungsgemäßen Verfahrens.

Fig. 1 zeigt eine Diskette 10 mit mehreren konzentrischen Speicherspuren 12, die konzentrisch zu einer zentralen Nabe 14 liegen. Diese Darstellung ist sehr vereinfacht, weshalb nur einzelne durchgehende Speicherspuren 12 gezeigt sind. Dem Fachmann ist es geläufig, daß eine Diskette 10 normalerweise eine Vielzahl solcher Speicherspuren 12 enthält. Ein Indexloch 16 bildet einen Referenzpunkt zur Lokalisierung bestimmter Informationen, die auf die Diskette 10 geschrieben sind.

Die Erfindung eignet sich besonders zum Einsatz in Verbindung mit Softsektor-Disketten. Wie bereits ausgeführt, muß jeder Sektor einer bestimmten Speicherspur 12 durch ein Kopfzeichen identifiziert werden. Wie aus Fig. 1 hervorgeht, enthält der Sektor 18 ein Kopfzeichen 20, auf das ein Abschnitt 22 folgt, der für Datenzeichen reserviert ist. Normalerweise enthält das Kopfzeichen die Spurnummer, die Sektornummer und andere Informationen, die von der jeweils zur Anwendung gelangenden Formatierungsübereinkunft abhängen. Der Abschnitt 22, der für die Datenzeichen reserviert ist, hat eine wesentlich größere Länge als das Kopfzeichen 20. Während der Formatierung werden die auf den Datenabschnitt 22 geschriebenen Bytes lediglich als Füllworte verwendet und auch oft als Blindzeichen bezeichnet. Oft handelt es sich dabei um eine sich wiederholende Folge von Bytes, die ein und denselben Wert haben.

Fig. 2 zeigt in schematischer Darstellung das Blockdiagramm einer Einrichtung zur Durchführung des erfindungsgemäßen Verfahrens. Ein Disketten-Steuersystem (Magnetplattenspeicher-Steuereinheit) 24 bildet einen Modul in einer Datenverarbeitungsanlage. Diese enthält eine Zentraleinheit (CPU) 26, die mit dem Disketten-Steuersystem 24 über einen Daten-/Steuerbus 28 und einen Adreßbus 30 in Verbindung steht. Die Datenverarbeitungsanlage enthält ferner einen Speicher 32 mit wahlfreiem Zugriff (RAM), der mit dem Disketten-Steuersystem 24 über die genannten Busleitungen 28 und 30 in Verbindung steht. Ein Merkmal der Erfindung besteht darin, daß als Speicher 32 ein relativ kleiner Speicher vorgesehen sein kann, verglichen mit dem Speicherbedarf bisheriger Formatierungsverfahren. Deshalb kann der Speicher 32 ein integrierter Speicher sein, der vorteilhaft innerhalb der Datenverarbeitungsanlage vorgesehen ist. Unabhängig von der Art des verwendeten Speichers ist der Speicherbedarf durch Anwendung des erfindungsgemäßen Verfahrens sehr gering.

Das Disketten-Steuersystem 24 enthält ein Steuerchip (Steuerschaltung) 34, das zum Schreiben der Informationszeichen aus dem Speicher 32 auf die dazu vorgesehenen Stellen der Diskette 10 dient. Das Steuerchip 34 bewirkt eine Bewegung eines nicht dargestellten Lese-/Schreibkopfes auf die verschiedenen Speicherspuren 12 der Diskette 10 sowie in an sich bekannter Weise die geeignete zeitliche Steuerung der Schreib- und Lesefunktionen. Das Steuerchip 34 kann vom Typ 1771 der Firma Western Digital sein. Während des Formatierungsvorgangs wird das Steuerchip 34 lediglich zum Schreiben von Informationszeichen auf die Diskette 10 benutzt.

Eine logische Steuerschaltung 36 steuert die meisten interpretativen Funktionen des Disketten-Steuersystems 24. Die logische Steuerschaltung 36 besteht aus logischen Verknüpfungsschaltungen der üblichen Art, die die im folgenden zu beschreibenden Funktionen durchführen. Alternativ können diese Verknüpfungsschaltungen auch durch einen einfachen Mikroprozessor ersetzt sein.

Ein Adreßzähler 38 des Disketten-Steuersystems 24 dient zur Adressierung ausgewählter Speicherplätze im Speicher 32. Vorzugsweise wird eine direkte Adressierung angewendet, um während des Formatierungsvorgangs die jeweils aktuellen Inhalte des Speichers 32 auszulesen. In den Adreßzähler 38 wird durch die Zentraleinheit 26 über den Daten-/Steuerbus 28 die jeweilige Adresse eingegeben. Danach wird der Inhalt des Adreßzählers 38 über den Adreßbus 30 dem Speicher 32 zugeführt, wodurch dieser den Inhalt des adressierten Speicherplatzes auf den Datenbus 28 ausgibt.

Das Disketten-Steuersystem 24 enthält ferner einen Steuerzähler 40. Der Steuerzähler 40 ist ein 8stelliger Zähler, in dem über den Daten-/Steuerbus 28 eine Binärzahl eingegeben werden kann. Bei Empfang bestimmter Steuersignale aus der logischen Steuerschaltung 36 wird der Inhalt des Zählers 40 um einen Zählschritt geändert. Wird ein bestimmter Zählerstand erreicht, so gibt der Steuerzähler 40 ein vorgegebenes Ausgangssignal an die logische Steuerschaltung 36 ab. Bei dem vorzugsweisen Ausführungsbeispiel ist der Steuerzähler 40 ein Abwärtszähler, der durch ein Steuersignal auf der Leitung 52 abwärts gezählt wird und auf der Leitung 54 ein Ausgangssignal abgibt, wenn er den Zählschritt Null erreicht.

Im folgenden wird das erfindungsgemäße Verfahren unter Bezugnahme auf Fig. 3 weiter erläutert. Die Zentraleinheit 26 gibt in den Speicher 32 die zur Durchführung der Formatierung erforderlichen Informationen ein. Vorzugsweise werden diese Informationen in den Speicher 32 als Tabelle eingegeben, die mehrere Pakete aus zwei Bytes enthält, welche in benachbarten Speicherabschnitten gespeichert werden. Jedes Paket enthält ein N-Byte und ein V-Byte. Die N-Bytes enthalten eine numerische Variable, welche die Anzahl angibt, mit der der Wert des zugeordneten V-Bytes auf die Diskette 10 geschrieben werden soll. Wenn beispielsweise der Binärwert 3 einhundert mal zu schreiben ist, so enthält das N-Byte die Zahl 100, während das V-Byte die Zahl 3 enthält. Die N-Bytes werden im Speicher 32 an geradzahlig adressierten Speicherabschnitten und die V-Bytes an ungeradzahlig adressierten Speicherabschnitten gespeichert. Jedes seqentiell unterschiedliche Informationsbyte, das auf die Diskette 10 zu schreiben ist, enthält sein eigenes N-Byte als Vorläufer im Speicher 32. Allgemein gehen die Kopfinformationspakete den Dateninformationspaketen voraus.

Der Adreßzähler 38 wird dann mit der Adresse der ersten Eingabe der Tabelle des Speichers 32 geladen, indem die Zentraleinheit 26 die Adresse auf den Daten-/Steuerbus 28 gibt und die logische Steuerschaltung 36 einen Ladebefehl abgibt. Die erste Eingabe erfolgt mit geradzahligen Adressen, d. h. mit dem Wert 00, der dem N-Byte für das erste Paket entspricht. Die Zentraleinheit 26 signalisiert der logischen Steuerschaltung 36, daß der Adreßzähler 38 geladen ist und daß das Disketten-Steuersystem 24 den Schreibvorgang auf die Diskette 10 beginnen kann. Nachdem der Adreßzähler 38 geladen ist, wird die Zentraleinheit 26 nicht mehr zur Formatierung für die gerade zu beschreibende Speicherspur 12 benötigt.

Das Steuerchip 34 bewegt den Lese-/Schreibkopf auf diese Speicherspur 12 der Diskette 10 und beginnt die Suche nach dem dort vorhandenen Indexloch 16. Bei Feststellung des Indexlochs 16 fordert das Steuerchip 34 über die Leitung 44 Daten aus der logischen Schaltung 36 an.

Die logische Steuerschaltung 36 fragt den Inhalt des Adreßzählers 38 ab, um zu bestimmen, ob dieser eine geradzahlige oder ungeradzahlige Zahl enthält. Dies kann auf unterschiedlichste Weise durchgeführt werden, beispielsweise durch Verwendung einer bistabilen Schaltung 37, die jeweils dann ihren Schaltzustand wechselt, wenn der Inhalt des Adreßzählers 38 sich ändert. Wenn der Adreßzähler eine geradzahlige Zahl enthält, die auf das N-Byte des ersten Paketes zeigt, so wird diese in den Steuerzähler 40 über einen Bus 39 geladen, in dem ein Ladesignal durch die logische Steuerschaltung 36 auf der Leitung 46 abgegeben wird.

Nachdem der Steuerzähler 40 geladen ist, schaltet die logische Steuerschaltung 36 den Adreßzähler 38 um einen Schritt weiter, wozu ein Signal auf der Leitung 48 dient. Nun ist der Inhalt des Adreßzählers 38 eine ungerade Zahl, und zwar eine Adresse, die auf das V-Byte des ersten Paketes zeigt. Durch den ungeradzahligen Inhalt des Adreßzählers 38 bewirkt die logische Steuerschaltung 36 eine Ansteuerung des Chips 34 mit einem Schreibbefehl auf der Leitung 50, wodurch das V-Byte von dem Daten-/Steuerbus 28 auf die Diskette 10 geschrieben wird.

Das Steuerchip 34 fordert dann neue Informationen durch ein Anforderungssignal auf der Leitung 44 an, welches auf die logische Steuerschaltung 36 gegeben wird. Dadurch bewirkt die logische Steuerschaltung 36 ein Abwärtszählen des Steuerzählers 40 über die Leitung 52. Wenn der abwärtsgezählte Inhalt des Steuerzählers 40 von Null abweicht, gibt die logische Steuerschaltung 36 einen weiteren Schreibbefehl an das Steuerchip 34, wodurch dieses dasselbe V-Byte auf den nächsten zugeordneten Abschnitt der Diskette 10 schreibt. Hierbei ist wichtig festzustellen, daß der Inhalt des Adreßzählers 38 nicht geändert wird, wenn nicht der Steuerzähler 40 auf Null abwärts gezählt wurde. Somit zeigt der Adreßzähler 38 auch weiterhin auf einen stationären Speicherabschnitt des Speichers 32, der dasselbe V-Byte enthält. Dies setzt sich so oft fort, wie es durch das zugeordnete N-Byte bestimmt ist, welches zuvor in den Steuerzähler 40 geladen wurde. Es ist zu erkennen, daß sich dadurch eine wesentliche Einsparung an Speicheraufwand für den Speicher 32 ergibt, insbesondere wenn eine große Anzahl von Blindzeichen wiederholt auf die Diskette 10 zu schreiben ist. Soll beispielsweise eine Kette von 100 Bytes mit jeweils dem digitalen Wert 3 auf die Diskette 10 geschrieben werden, so sind hierzu durch die Erfindung nur zwei Speicherplätze des Speichers 32 verglichen mit 100 Speicherplätzen nach dem bisherigen Verfahren erforderlich.

Wenn der Inhalt des Steuerzählers 40 den Wert Null erreicht, so wird der Adreßzähler 38 weitergeschaltet, und das vorstehend beschriebene Verfahren setzt sich für den restlichen Teil der Speicherspur 12 fort. Ist diese Speicherspur 12 voll beschrieben, so wird dies durch das Steuerchip 34 an die Zentraleinheit 26 gemeldet. Die Zentraleinheit 26 schreibt nun erneut die N-V-Pakete in den Speicher 32, um die gewünschten Inhalte der nächsten zu formatierenden Speicherspur 12 zu bestimmen, steuert den Adreßzähler 36 an die Stelle zurück, die dem Beginn der N-V-Paketliste im Speicher 32 entspricht und gibt einen Befehl an das Steuerchip 34 zur Formatierung der nächsten Speicherspur 12. Dieser Vorgang setzt sich fort, bis alle Speicherspuren 12 formatiert sind.

Die vorstehende Beschreibung läßt nun erkennen, daß die Erfindung zu wesentlichen Vorteilen bei der Verringerung des Speicherbedarfs gegenüber bisherigen Formatierungsverfahren führt. Zusätzlich werden diese Vorteile erreicht, ohne daß zusätzlicher Bedarf an Prozeßzeit entsteht, wie es bei alternativen Lösungsmöglichkeiten der Fall wäre, bei denen beispielsweise nicht komprimierte Daten und zwei kurze Pufferspeicherabschnitte verwendet werden können. Bei solchen Verfahrensarten würde der Speicher 32 einen Pufferabschnitt füllen, während das Disketten-Steuersystem 24 den anderen entleeren würde. Dann würde die Zentraleinheit den leeren Pufferabschnitt füllen, während das Disketten-Steuersystem 24 den ersten Pufferabschnitt entleeren würde. Dieses alternierende Verfahren würde sich so oft wiederholen, wie es zur Übertragung ausreichender nicht komprimierter Daten von der Zentraleinheit auf die Diskette 10 erforderlich wäre, um eine vollständige Speicherspur 12 zu füllen bzw. zu formatieren.

**Patentansprüche**

1. Verfahren zur Formatierung einer Magnetspeicherplatte, bei dem unterschiedliche Folgen gleichartiger Informationsbytes in einer durch jeweils einen numerischen Wert vorbestimmten Anzahl auf eine vorgegebene Speicherspur (12) zu schreiben sind, wobei eine mit der Zentraleinheit (26) über einen gemeinsamen Bus (28, 30) verbundene Magnetspeicherplatten-Steuereinheit (24) mit einem Steuerzähler (40) und einer Steuerschaltung (34) zur zeitlichen Steuerung der Schreib- und Lesefunktionen und ein Speicher (32) mit wahlfreiem Zugriff verwendet werden, die außerhalb der Zentraleinheit (26) angeordnet sind, und die Informationsbytes unter Steuerung des Steuerzählers (40) und der Steuerschaltung (34) so oft auf die vorgegebene Speicherspur (12) geschrieben werden, wie es der jeweilige numerische Wert angibt, dadurch gekennzeichnet, daß die Informationsbytes und die jeweiligen numerischen Werte von der Zentraleinheit (26) in den am gemeinsamen Bus (28, 30) befindlichen Speicher (32) gespeichert werden, daß die Anfangs-Ansteueradresse für den Speicher (32) zuvor in einen Adressenspeicher (38) der Magnetspeicherplatten-Steuereinheit (24) eingegeben wird und daß abhängig vom Inhalt dieses Adressenspeichers (38) entweder der numerische Wert vom Speicher (32) in den Steuerzähler (40) eingegeben wird oder der Informationsinhalt des mit dem Adressenspeicher (38) adressierten Bereichs des Speichers (32) auf die vorgegebene Speicherspur (12) geschrieben wird.

2. Verfahren nach Anspruch 1, dadurch gekennzeichnet, daß der Inhalt des Adressenspeichers (38) auf einen geraden bzw. ungeraden Wert überprüft wird, daß ein numerischer Wert der genannten Art in den Steuerzähler (40) eingegeben wird, wenn der Inhalt des Adressenspeichers (38) von der einen Art ist, daß dann der Inhalt des Adressenspeichers (38) geändert wird, daß der Informationsinhalt des mit dem Adressenspeicher (38) adressierten Speicherabschnitts auf die vorgegebene Speicherspur (12) geschrieben wird, wenn der Inhalt des Adressenspeichers (38) von der anderen Art ist, daß dann der Inhalt des Steuerzählers (40) geändert wird, und daß der Inhalt des Adressenspeichers (38) geändert wird, wenn der Steuerzähler (40) einen vorbestimmten Stand erreicht.

3. Verfahren nach einem der vorhergehenden Ansprüche, dadurch gekennzeichnet, daß eine Folge von Informationsbytepaketen in einander benachbarte Speicherabschnitte in Form einer Tabelle eingespeichert wird, daß jedes Informationsbytepaket ein sequentiell unterschiedliches, auf eine vorbestimmte Speicherspur (12) zu schreibendes Informationsbyte und einen numerischen Wert enthält, der bestimmt, wie oft dieses Informationsbyte auf die Speicherspur zu schreiben ist, daß der numerische Wert jeweils an einem geradzahligen Speicherplatz und sein zugeordnetes Informationsbyte an dem nachfolgenden ungeradzahligen Speicherplatz gespeichert wird, daß in den Adressenspeicher (38) die Adresse des ersten Speicherabschnitts der Tabelle eingegeben wird, daß der Adressenspeicher (38) auf einen geraden oder ungeraden Inhalt überprüft wird, daß in den Steuerzähler (40) der numerische Wert eingegeben wird, wenn der Inhalt des Adressenspeichers (38) geradzahlig ist, daß dann der Adressenspeicher (38) weitergeschaltet wird, daß das mit dem Adressenspeicher adressierte Informationsbyte auf die Speicherspur (12) geschrieben wird, wenn der Inhalt des Adressenspeichers (38) ungeradzahlig ist, daß dann der Steuerzähler (40) abwärts gezählt wird, und daß der Adressenspeicher (38) aufwärts gezählt wird, wenn der Steuerzähler (40) den Zählerstand Null erreicht, wodurch das Informationsbyte so oft auf die Speicherspur (12) geschrieben wird, wie es durch den ihm zugeordneten numerischen Wert bestimmt ist.

4. Verfahren nach Anspruch 3, dadurch gekennzeichnet, daß die Informationsbytes Kopfzeichen und Datenzeichen enthalten.

5. Schaltungsanordnung zur Formatierung einer Magnetspeicherplatte, mit der unterschiedliche Folgen gleichartiger Informationsbytes in einer durch jeweils einen numerischen Wert vorbestimmten Anzahl auf eine vorgegebene Speicherspur (12) zu schreiben sind, wobei eine mit einer Zentraleinheit (26) über einen gemeinsamen Bus (28, 30) verbundene Magnetspeicherplatten-Steuereinheit (24) mit einem Steuerzähler (40) und einer Steuerschaltung (34) zur zeitlichen Steuerung der Schreib- und Lesefunktionen und ein Speicher (32) mit wahlfreiem Zugriff verwendet werden, die außerhalb der Zentraleinheit (26) angeordnet sind, und die Informationsbytes unter Steuerung des Steuerzählers (40) und der Steuerschaltung (34) so oft auf die vorgegebene Speicherspur (12) geschrieben werden, wie es der jeweilige numerische Wert angibt, dadurch gekennzeichnet, daß die Informationsbytes und die jeweiligen numerischen Werte von der Zentraleinheit (26) in den am gemeinsamen Bus (28, 30) befindlichen Speicher (32) gespeichert werden, daß die Anfangs-Ansteueradresse für den Speicher (32) zuvor in einen Adressenspeicher (38) der Magnetspeicherplatten-Steuereinheit (24) eingegeben wird und daß abhängig vom Inhalt dieses Adressenspeichers (38) entweder der numerische Wert vom Speicher (32) unter Steuerung einer in der Magnetspeicherplatten-Steuereinheit (24) befindlichen logischen Schaltung (36) in den Steuerzähler (40) eingegeben wird oder der Informationsinhalt des mit dem Adressenspeicher (38) adressierten Bereichs des Speichers (32) auf die vorgegebene Speicherspur (12) geschrieben wird.

6. Schaltungsanordnung nach Anspruch 5, dadurch gekennzeichnet, daß der Speicher (32) zur Speicherung des Informationsbytes und des numerischen Wertes einander benachbarte Speicherabschnitte enthält.

7. Schaltungsanordnung nach Anspruch 6, gekennzeichnet durch folgende weitere Bausteine der Magnetspeicherplatten-Steuereinheit: durch eine Auswerteschaltung (37) zur Feststellung, ob der Inhalt des Adressenspeichers (38) geradzahlig oder ungeradzahlig ist, durch Vorrichtungen (46, 48) zur Eingabe des jeweiligen numerischen Wertes in den Steuerzähler (40), wenn der Inhalt des Adressenspeichers (38) von der einen Art ist, und zur nachfolgenden Änderung des Inhalts des Adressenspeichers (38), durch Vorrichtungen (48, 50, 52) zur Übertragung der Informationsbytes auf die Steuerschaltung (34), wenn der Inhalt des Adressenspeichers (38) von der anderen Art ist, und zur nachfolgenden Änderung des Inhalts des Steuerzählers (40), und durch Vorrichtungen (54, 48) zur Erzeugung eines Signals zur Einleitung der Änderung des Inhalts des Adressenspeichers (38), wenn der Steuerzähler (40) einen vorbestimmten Zählerstand erreicht.

8. Schaltungsanordnung nach Anspruch 7, dadurch gekennzeichnet, daß jedem sequentiell unterschiedlichen Informationsbyte ein bestimmter numerischer Wert zugeordnet ist.

9. Schaltungsanordnung nach Anspruch 8, dadurch gekennzeichnet, daß die Informationsbytes und die numerischen Werte in Paketform innerhalb einer Tabelle des Speichers (32) gespeichert sind, wobei die numerischen Werte dem jeweils zugeordneten Informationsbyte vorausgehen.

## Claims

1. A method for formatting a magnetic memory disk, wherein different strings of similar information bytes are to be written onto a given track (12) in a number which is predetermined by a numeric value each, said method using a magnetic memory disk controller unit (24) having a control counter (40) and a control circuit means (34) and being connected with the central processing unit (26) through a common bus (28, 30) for the temporal control of the writing and reading operations, and a random-access memory (32), said magnetic memory disk controller unit and said random access memory being located outside said central processing unit (26), said information bytes being written, under the control by said control counter (40) and said control circuit (34), onto said given track (12) for a number of times defined by the respective numeric value, characterized in that the information bytes and the respective numeric values are stored by said central processing unit (26) in the memory (32) connected to said common bus (28, 30); that an address store (38) of said magnetic memory disk controller unit (24) is first loaded with the starting address for said memory (32); and that, in response to the contents of said address store (38), either said control counter (40) is loaded with the numeric value from said memory (32) or the information contents of the location of said memory (32) addressed by said address store (38) is written onto the given track (12).

2. A method as set forth in claim 1, characterized in that the contents of said address store (38) is checked as to an even or odd value; that said control counter (40) is loaded with a numeric value of the respective type when the contents of said address store (38) is of one type; that the contents of said address store (38) is then changed; that the information contents of the memory section addressed by said address store (38) is written onto said given track (12) when the contents of said address store (38) is of another type; that the contents of said control counter (40) is then changed; and that the contents of said address store (38) is changed when said control counter (40) has reached a predetermined count.

3. A method as set forth in anyone of the foregoing claims, characterized in that a string of information byte packets is written into adjacent memory sections in the form of a table; that each packet of information bytes contains a sequentially different information byte to be written onto a predetermined track (12) and a numeric value defining the number of times that said information byte is to be written onto said track; that said numeric value is written into an even memory location and its associated information byte is written into the subsequent odd memory location; that said address store (38) is loaded with the address of the first memory section of the table; that said address store (38) is checked as to its even or odd contents; that said control counter (40) is loaded with said numeric value when the contents of said address store (38) is even; that said address store (38) is then stepped on; that the information byte addressed by said address store is written onto said track (12) when the contents of said address store (38) is odd; that said control counter (40) is then decremented; and that said address store (38) is incremented when said control counter (40) has reached zero thus causing that the information byte is written onto said track (12) a number of times as defined by the associated numeric value.

4. A method as set forth in claim 3, characterized in that said information bytes contain header and data information.

5. A circuit arrangement for formatting a magnetic memory disk, by which different strings of similar information bytes are to be written onto a given track (12) in a number which is predetermined by a numeric value each, wherein a magnetic memory disk controller unit (24) having a control counter (40) and a control circuit means (34) and being connected with the central processing unit (26) through a common bus (28, 30) for the temporal control of the writing and reading operations, and a randomaccess memory (32) are used, said magnetic memory disk controller unit (24) and said random access memory (32) being located outside said central processing unit (26), and wherein said information bytes are written, under the control by said control counter (40) and said control circuit (34), onto said given track (12) for a number of times defined by the respective numeric value, characterized in that the information bytes and the respective numeric values are stored by the central processing unit (26) in the memory (32) connected to said common bus (28, 30); that an address store (38) of said magnetic memory disk controller unit (24) is first loaded with the starting address for said memory (32); and that, in response to the contents of said address store (38), either said control counter (40) is loaded with the numeric value from said memory (32) under control by a logic circuit (36) within said magnetic memory disk controller unit (24) or the information contents of the location of said memory (32) addressed by said address store (38) is written onto said given track (12).

6. A circuit arrangement as set forth in claim 5, characterized in that said memory (32) contains adjacent memory sections for storing the information byte and the numeric value.

7. A circuit arrangement as set forth in claim 6, characterized by the following further modules of said magnetic memory disk controller unit: a circuit (37) for detecting whether the contents of said address store (38) is even or odd; means (46, 48) for loading said control counter (40) with the respective numeric value when the contents of said address store (38) is of one type and for subsequently changing the contents of said address store (38), means (48, 50, 52) for transferring the information bytes to said control circuit (34) when the contents of said address store (38) is of another type and for subsequently changing the contents of said control counter (40); and means (54, 48) for generating a signal for initiating the change of the contents of said address store (38) when said control counter (40) reaches a predetermined count.

8. A circuit arrangement as set forth in claim 7, characterized in that a predetermined numeric value is allotted to each sequentially different information byte.

9. A circuit arrangement as set forth in claim 8, characterized in that the information bytes and the numeric values are stored as packets in a table of said memory (32), the numeric values preceding their associated information byte.

**Revendications**

1. Procédé pour le formatage d'un disque de mémoire magnétique, dans lequel des séquences différentes de multiplets d'informations similaires doivent être écrites sur une piste prédéterminée (12) en nombre prédéterminé par une valeur numérique respective, et on utilise une inité de commande (24) de disques de mémoire magnétiques comportant un compteur de commande (40) et un circuit de commande (34) pour la commande chronologique des fonctions d'écriture et de lecture et reliée à une unité centrale (26) par un bus commun (28, 30), et une mémoire (32) à accès aléatoire, qui sont disposées à l'extérieur de l'unité centrale (26), et les multiplets d'informations sont écrits sur la piste prédéterminée (12) sous la commande du compteur de commande (40) et du circuit de commande (34) aussi souvent que l'indique la valeur numérique respective, caractérisé en ce que les multiplets d'informations et les valeurs numériques respectives sont enregistrés par l'unité centrale (26) dans la mémoire (32) se trouvant sur le bus commun (28,30), que l'adresse de commande initiale pour la mémoire (32) est préalablement introduite dans une mémoire d'adresses (38) de l'unité de commande de disques magnétiques de mémoire, et que, en fonction du contenu de cette mémoire d'adresses (38), ou bien la valeur numérique de la mémoire (32) est introduite dans le compteur de commande (40), ou bien le contenu d'information de la zone de la mémoire (32) adressée par la mémoire d'adresses est écrit sur la piste (12) prédéterminée.

2. Procédé selon la revendication 1, caractérisé en ce que le contenu de la mémoire d'adresses (38) est contrôlé en ce que concerne une valeur paire ou impaire, qu'une valeur numérique du type précité est introduite dans le compteur de commande (40) lorsque le contenu de la mémoire d'adresses (38) est de l'un des types, que le contenu de la mémoire d'adresses (38) est alors changé, que le contenu d'information de la portion de mémoire adressée par la mémoire d'adresses (38) est écrit sur la piste prédéterminée (12) lorsque le contenu de la mémoire d'adresses (38) est de l'autre type, que le contenu du compteur de commande (40) est alors changé, et que le contenu de la mémoire d'adresses (38) est changé lorsque le compteur de commande (40) a atteint une position prédéterminée.

3. Procédé selon l'une des revendications précédentes, caractérisé en ce qu'une séquence de paquets de multiplets d'informations est enregistrée dans des portions de mémoire voisines l'une de l'autre sous forme d'une table, que chaque paquet de multiplets d'informations contient un multiplet d'informations séquentiellement différent qui doit être écrit sur une piste (12) prédéterminée et une valeur numérique qui détermine le nombre de fois où ce multiplet d'informations doit être écrit sur la piste, que la valeur numérique est enregistrée chaque fois à une place de mémoire paire et son multiplet d'informations associé à la place de mémoire impaire suivante, que l'adresse de la primière portion de mémoire de la table est introduite dans la mémoire d'adresses (38), que la mémoire d'adresses (38) est contrôlée en ce qui concerne un contenu pair ou impair, que la valeur numérique est introduite dans le compteur de commande (40) lorsque le contenu de la mémoire d'adresses (38) est pair, que la mémoire d'adresses (38) est alors indexée, que le multiplet d'informations adressé par la mémoire d'adresses est écrit sur la piste (12) lorsque le contenu de la mémoire d'adresses (38) est impair, que le compteur de commande (40) est alors décrémenté et que la mémoire d'adresses (38) est incrémentée, lorsque le compteur de commande (40) a atteint la position zéro, grâce à quoi le multiplet d'informations est écrit aussi souvent sur la piste (12) que l'a déterminé la valeur numérique qui lui est associée.

4. Procédé selon la revendication 3, caractérisé en ce que les multiplets d'informations contiennent des caractères de tête et des caractères de données.

5. Montage pour le formatage d'un disque de mémoire magnétique avec lequel des séquences différentes de multiplets d'informations similaires doivent être écrites sur une piste prédéterminée (12) en nombre prédéterminé par une valeur numérique respective, et on utilise une unité de commande (24) de disques de mémoire magnétiques comportant un compteur de commande (40) et un circuit de commande (34) pour la commande chronologique des fonctions d'écriture et de lecture et reliée à une unité centrale (26) par un bus commun (28, 30), et une mémoire (32) à accès aléatoire, qui sont disposées en dehors de l'unité centrale (26), et les multiplets d'informations sont écrits sur la piste prédéterminée (12) sous la commande du compteur de commande (40) et du circuit de commande (34) aussi souvent que l'indique la valeur numérique respective, caractérisé en ce que les multiplets d'informations et les valeurs numériques respectives sont enregistrés par l'unité centrale (26) dans la mémoire (32) se trouvant sur le bus commun (28, 30), que l'adresse de commande initiale pour la mémoire (32) est préalablement introduite dans une mémoire d'adresses (38) de l'unité de commande (24) de disques magnétiques de mémoire et qu'en fonction du contenu de cette mémoire d'adresses (38), ou bien la valeur numérique de la mémoire (32) est introduit dans le compteur de commande (40) sous la commande d'un circuit logique (36) situé dans l'unité de commande (24) de disques de mémoire magnétiques, ou bien le contenu d'information de la zone de la mémoire (32) adressée par la mémoire d'adresses (38) est écrit sur la piste prédéterminée (12).

6. Montage selon la revendication 5, caractérisé en ce que, pour enregistrer le multiplet d'informations et la valeur numérique, la mémoire (32) contient des sections de mémoire voisines l'une de l'autre.

7. Montage selon la revendication 6, caractérisé par les autres composants suivants de l'unité de commande de disques de mémoire magnétiques: un circuit d'évaluation (37) pour déterminer si le contenu de la mémoire d'adresses (38) est pair ou impair, des dispostifs (46, 48) pour introduire la valeur numérique respective dans le compteur de commande (40) lorsque le contenu de la mémoire d'adresses (38) est de l'un des types, et pour changer ensuite le contenu de la mémoire d'adresses (38), des dispositifs (48, 50, 52) pour transférer les multiplets d'informations sur le circuit de commande (34) lorsque le contenu de la mémoire d'àdresses (38) est de l'autre type, et pour changer ensuite le contenu du compteur de commande (40), et des dispositifs (54, 48) pour produire un signal destiné à déclencher le changement du contenu de la mémoire d'adresses (38) lorsque le compteur de commande (40) à attaint une position prédéterminée.

8. Montage selon la revendication 7, caractérisé en ce qu'une valeur numérique déterminée est associée à chaque multiplet d'informations séquentiellement différent.

9. Montage selon la revendication 8, caractérisé en ce que les multiplets d'informations et les valeurs numériques sont enregistrés sous forme de paquets à l'intérieur d'une table de la mémoire (32), les valeurs numériques précédant le multiplet d'informations associé.

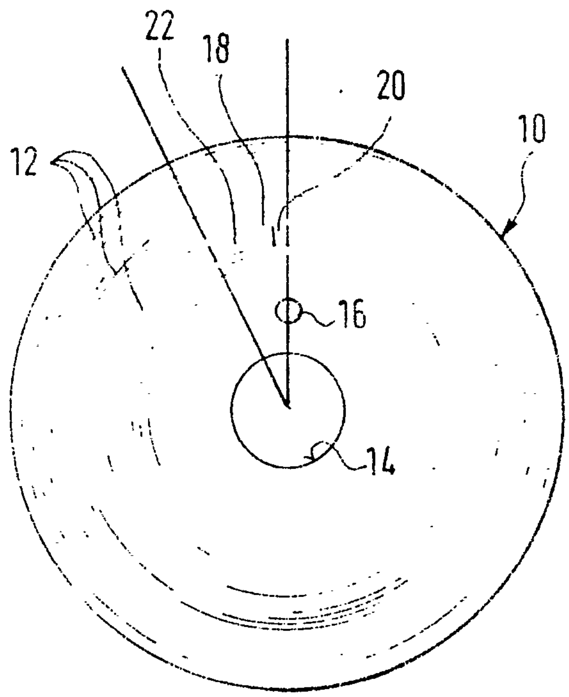
22
18
20
10
12
16
14

Fig. 1

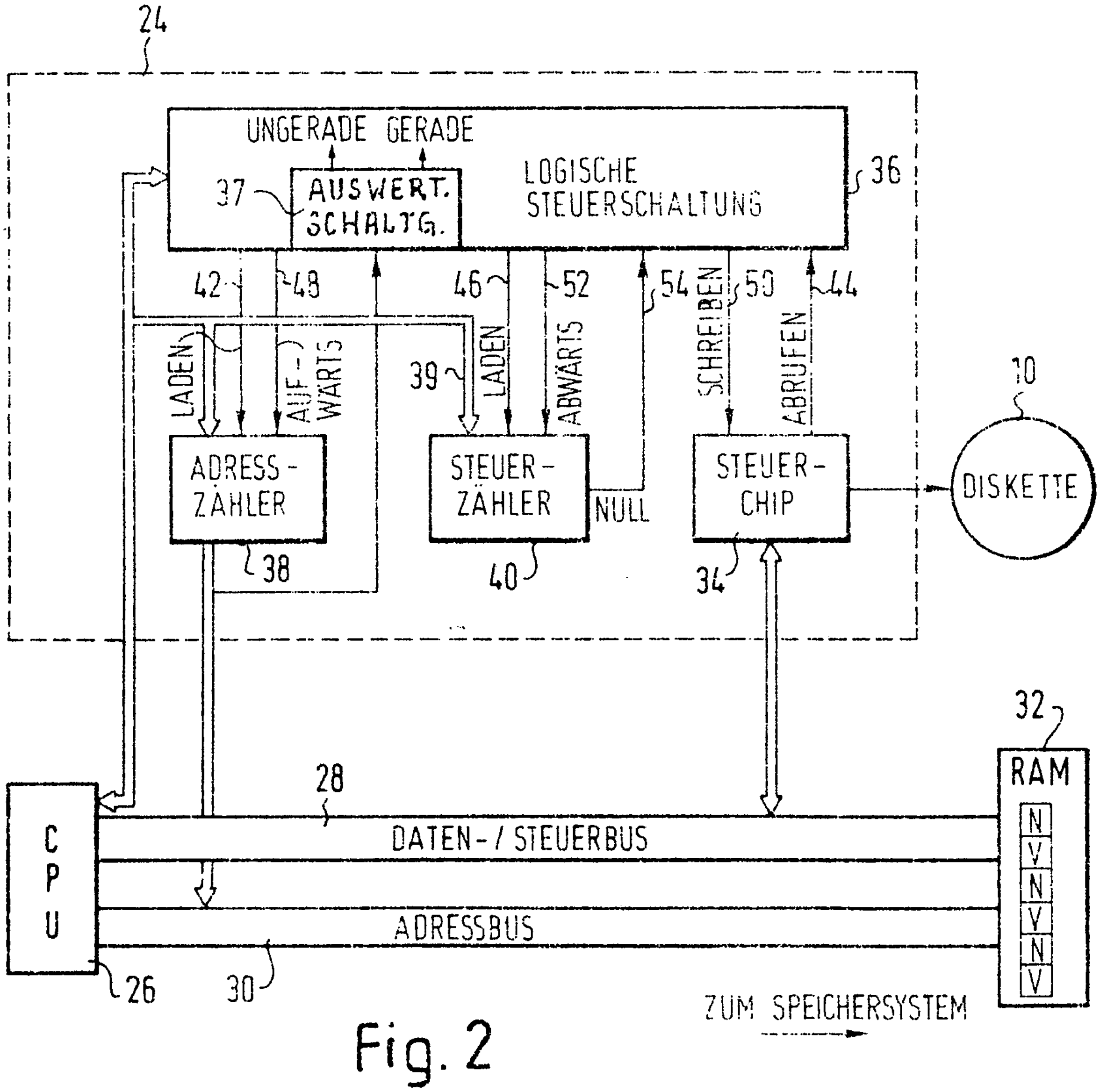
24
UNGERADE GERADE
37
AUSWERT. SCHALTG.
LOGISCHE STEUERSCHALTUNG
36
42
48
46
52
54
50
44
LADEN
AUF-/WÄRTS
39
LADEN
ABWÄRTS
SCHREIBEN
ABRUFEN
10
ADRESS-ZÄHLER
STEUER-ZÄHLER
NULL
STEUER-CHIP
DISKETTE
38
40
34
32
RAM
28
DATEN-/STEUERBUS
C P U
ADRESSBUS
N V N V N V
26
30
ZUM SPEICHERSYSTEM

Fig. 2

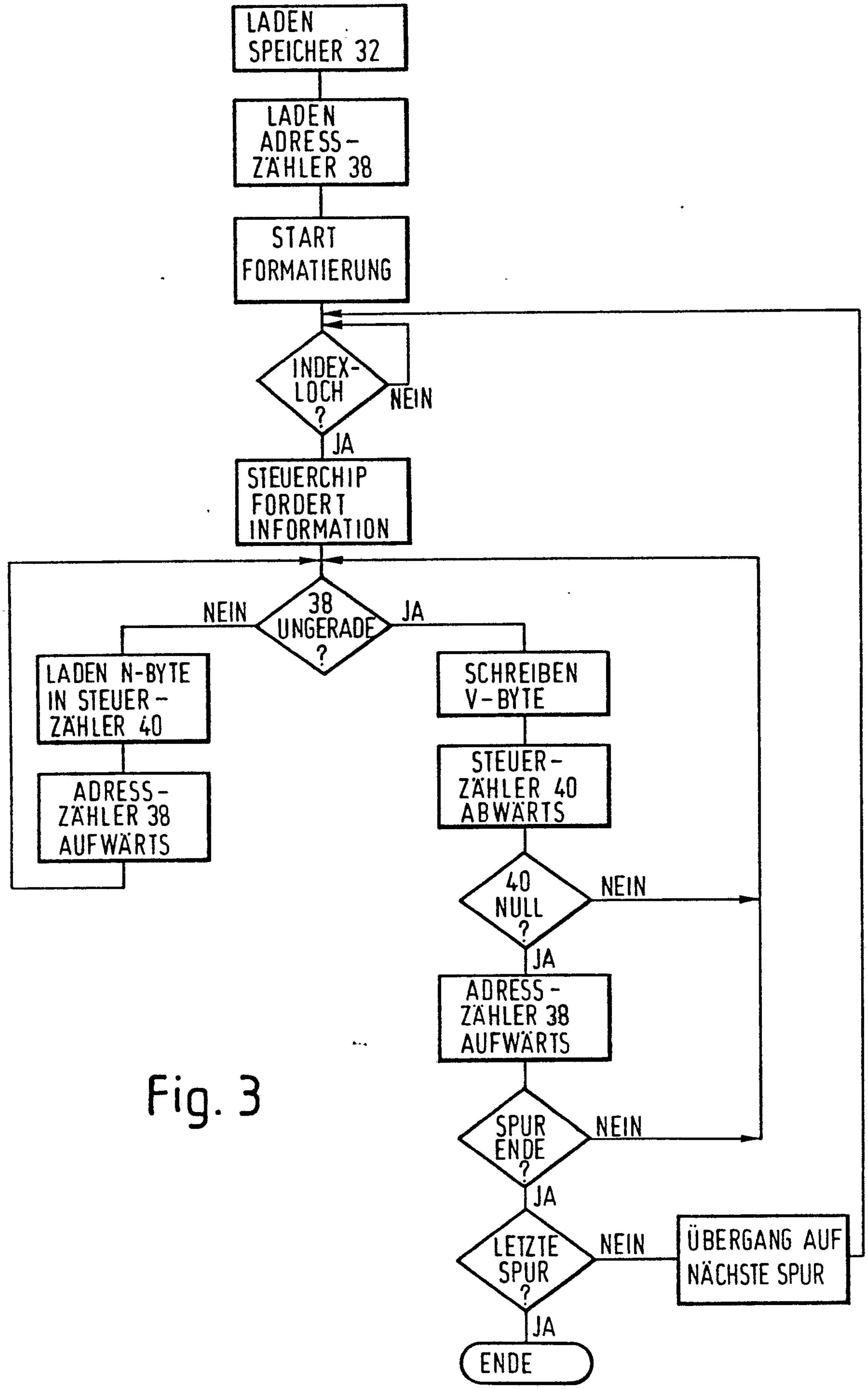
LADEN
SPEICHER 32
LADEN
ADRESS-
ZÄHLER 38
START
FORMATIERUNG
INDEX-
LOCH
?
NEIN
JA
STEUERCHIP
FORDERT
INFORMATION
38
UNGERADE
?
NEIN
JA
LADEN N-BYTE
IN STEUER-
ZÄHLER 40
ADRESS-
ZÄHLER 38
AUFWÄRTS
SCHREIBEN
V-BYTE
STEUER-
ZÄHLER 40
ABWÄRTS
40
NULL
?
NEIN
JA
ADRESS-
ZÄHLER 38
AUFWÄRTS
SPUR
ENDE
?
NEIN
JA
LETZTE
SPUR
?
NEIN
ÜBERGANG AUF
NÄCHSTE SPUR
JA
ENDE

Fig. 3